(19) Europäisches Patentamt
European Patent Office
Office européen des brevets

(11) **EP 1 617 259 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(51) Int Cl.:
***G02B 21/00*** *(2006.01)*     ***G01N 21/64*** *(2006.01)*

(21) Anmeldenummer: **04023504.6**

(22) Anmeldetag: **01.10.2004**

(54) **Mikroskop mit erhöhter Auflösung**

Microscope with increased resolution

Microscope avec résolution accrue

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.07.2004 DE 102004034962**

(43) Veröffentlichungstag der Anmeldung:
**18.01.2006 Patentblatt 2006/03**

(73) Patentinhaber: **Carl Zeiss Microscopy GmbH 07745 Jena (DE)**

(72) Erfinder: **Wolleschensky, Ralf 07743 Jena (DE)**

(56) Entgegenhaltungen:
**EP-A- 1 248 132**     **DE-A1- 10 155 002**
**DE-A1- 10 257 237**

- **WESTPHAL V ET AL: "Laser-diode-stimulated emission depletion microscopy" APPLIED PHYSICS LETTERS, AMERICAN INSTITUTE OF PHYSICS. NEW YORK, US, Bd. 82, Nr. 18, 5. Mai 2003 (2003-05-05), Seiten 3125-3127, XP012033972 ISSN: 0003-6951**
- **R.HEINTZMANN, T.JOVIN, CH. CREMER: "Saturated patterned excitation microscopy-a concept for optical resolution improvement" J.OPT.SOC.AM.A, Bd. 19, Nr. 8, August 2002 (2002-08), Seiten 1599-1609, XP002322144**
- **CARL ZEISS JENA: "LSM 510 Laser Scanning Microscope" 2003, , XP002321662 * Seiten 12,13 ***

**Beschreibung**

Die Erfindung wird nachfolgend unter Bezugnahme auf die Zeichnungen noch näher erläutert.

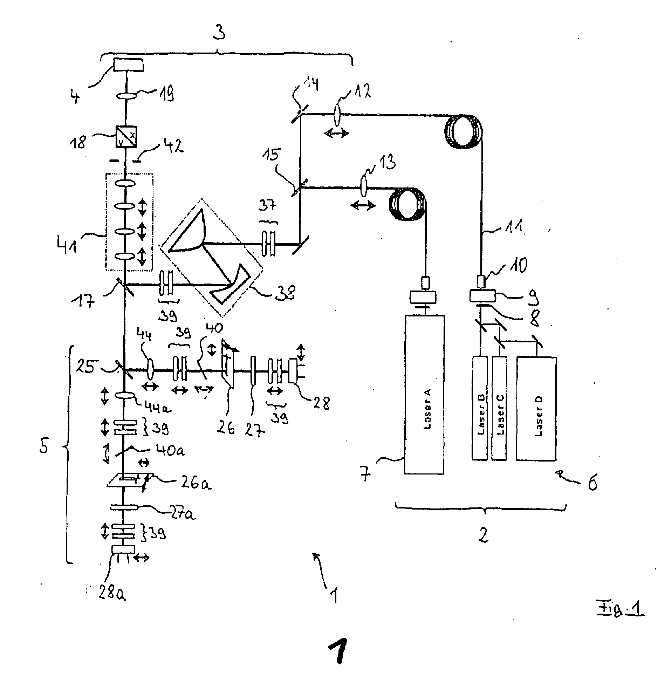

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Zur allgemeinen Beschreibung eines punktweise abtastenden Laser Scanning Mikroskopes wird auf DE 19702753A1 verwiesen.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder-bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführunsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

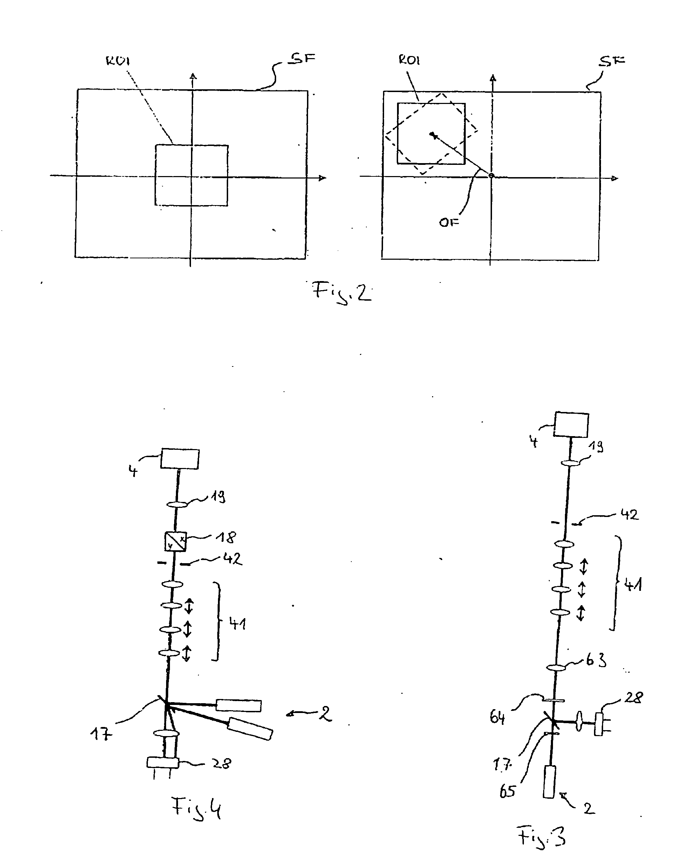

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 3 und 4 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektralneutraler Teilerspiegel gemäß der DE 10257237 A1 ausgeführt. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freiheitsgrade der Zoom-Optik 41 entsprechen genau der Zahl der Freitheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 2 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF.

Resonanzscanner sind beispielsweise in Pawley, Handbook of Biological Confocal Microscopy , Plenum Press 1994, Seite 461ff beschrieben.

Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 3 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 3 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 1 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 2 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 4, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 2 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage. Auch hier istein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

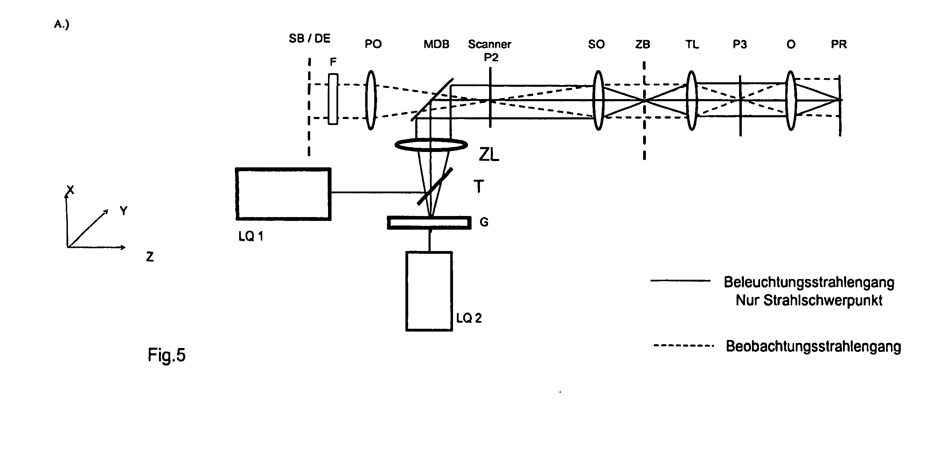

Fig. 5 zeigt eine Lichtquelle LQ2, der ein Gitter G nachgeordnet ist.

Über einen Teiler T kann diese mit einer Lichtquelle LQ1 zur Fluoreszenzanregung vereinigt werden. Beide Lichtquellen werden durch die Zylinderoptik ZL als Linie auf die Probe abgebildet. LQ 1 erzeugt hierbei eine homogene Linie auf/ in der Probe . LQ 2 durch die Wirkung des Gitters G eine periodisch modulierte Linie.

Ein MDB trennt die Beleuchtung von der Detektion. Der MDB kann als dichroitischer Farbteiler oder als Streifenspiegel entsprechend DE10257237 ausgebildet sein. Im letzteren Falle muss der MBD in der Nähe einer Pupillenebene der Mikroskopanordnung angeordnet sein. Er besitzt zur Einspiegelung der LQ 1 und der nullten Ordnung der LQ 2 einen zentral angeordneten Streifenspiegel (entlang der y-Achse) und für LQ 2 zwei entsprechend der Gitterfrequenz angeordnete dezentral entlang der y Achse angeordnete Streifenspiegel.

Ein Scanner P2 dient zur Bewegung der Beleuchtungslinie über die Probe PR. Weiter sind angeordnet: Scanoptik SO, Tubuslinse TL, Objektiv L im gemeinsamen Strahlengang sowie Pinholeoptik PO, Filter und Detektor oder Spaltblende im Detektionsstrahlengang.

LQ1 und LQ2 sind mit einer Ansteuereinheit zur Synchronisation der Probenbestrahlung mit LQ1 und LQ2 verbunden.

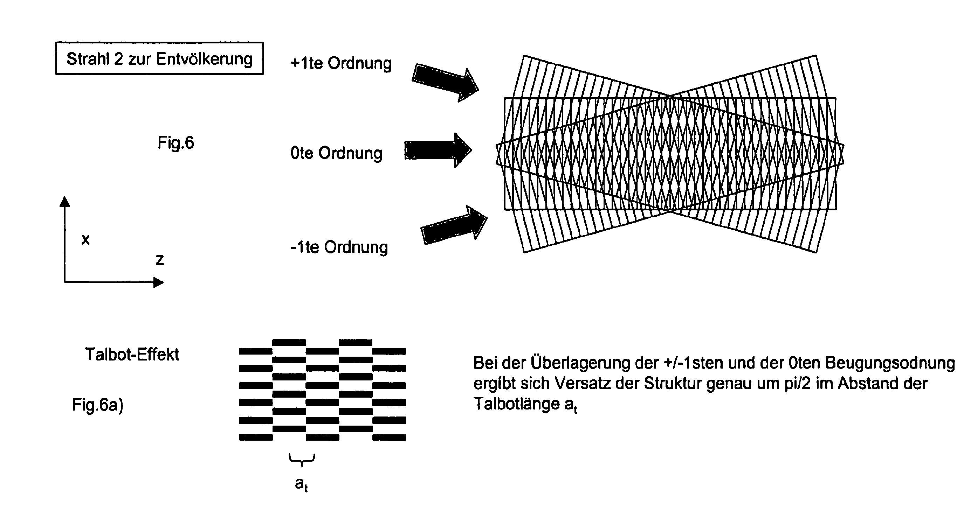

In Fig.6 ist dargestellt, wie an einem Amplitudengitter G in Transmission bei Durchstrahlung mit Laserlicht ein Interferenzfeld aus -1ter, 0ter sowie 1ter Ordnung gebildet wird.

Bildet man diese interferenzfähigen Felder in eine Probe z.B. linienförmig ab, so entsteht in Z- Richtung eine Talbotstruktur (Literatur Talboteffekt). Der Talboteffekt tritt bei Beugung von kohärentem Licht an einer ebenen periodischen Struktur der Periode d auf. In den Entfernungen von:

$$z_n = \frac{2nd^2}{\lambda}$$

entstehen Bilder der ursprünglichen Struktur, wobei für ungeradzahlige Vielfache die Struktur um genau die halbe Periode d der Originalstruktur verschoben ist (Lit: Lexikon der Optik, Spektrum Akademie Verlag, 1999, Berlin). Lambda bezeichnet hier die Wellenlänge und n das ganzzahlige Vielfache der Talbotebene. Im Teilbild a) der Fig. 6 sind die so genannten Talbotebenen (entlang x) schematisch dargestellt. Bei der Überlagerung der +/-1 sten und der 0ten Beugungsordnung ergibt sich ein Versatz der Struktur genau um pi/2 im Abstand der Talbotlänge at.

Die Tiefenauflösung des Objektivs ergibt sich aus:

$$\Delta z = \frac{\pi a^2}{2\lambda},$$

wobei a die laterale Auflösung des Objektivs ist. Vorzugsweise wird die Gitterkonstante des Gitters G so gewählt, dass sich in der Probe eine periodische Struktur mit:

$$d = \frac{\sqrt{\pi} a}{2}$$

ergibt. In diesem Falle ist der Abstand der Talbotebenen gleich der Tiefenauflösung des Mikroskopobjektivs.

Die LQ 2 in Kombination mit dem Gitter dient vorteilhaft zur Unterdrückung von Fluoreszenzvorgängen

( Lit. S. W. Hell and J. Wichmann, Opt. Lett. 19, 780; 1994). Entvölkerungsmechanismen können beispielsweise die stimulierte Emission (Lit: T. A. Klar, M. Dyba, and S. W. Hell; Appl. Phys. Let. Vol 78, No.: 4, 393, 2001), die Entvölkerung des Grundniveaus oder das gezielte Schalten von Farbstoffen in verschiedene Emissionszustände / Absorptionszustände sein. Der Strahl von LQ 1 dient zur Fluoreszenzanregung.

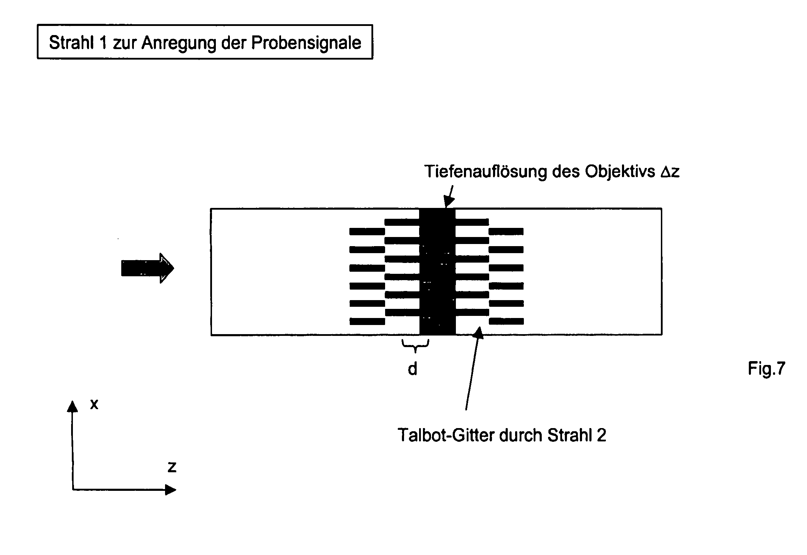

In Fig. 7 ist in X-Z Richtung eine Strahllinie der LQ 1 dargestellt, die die Probe homogen in Pfeilrichtung entlang der X- Achse beleuchtet. Die Tiefenauflösung des Objektivs ist vorzugsweise identisch dem Abstand der Talbotebenen eingestellt. Durch mittels Gitter erzeugte Beleuchtungsmuster im Strahl 1 (aus LQ 2) wird im Bereich der schwarzen Stellen (Gitterverteilung) die Fluoreszenzaktivität der Farbstoffmoleküle unterdrückt.

Bei der stimulierten Emission geschieht dies durch das gezielte Abregen der Farbstoffmoleküle durch stimulierte Emission im Bereich der schwarzen Streifen. Es entstehen also Bereiche mit höherer Fluoreszenzintensität (nicht abgeregt) und niedrigerer Fluoreszenzintensität (abgeregt). Durch Detektion der Bereiche höherer Intensität kann die Auflösung einer Bildaufnahme erhöht werden. Die Lichtquellen LQ1 und LQ2 werden hierzu vorteilhaft gepulst. Mit einem Puls aus LQ 1 wird der Farbstoff zuerst angeregt. Noch während der Fluoreszenzlebensdauer (Nanosekundenbereich) erfolgt die Abregung der Fluoreszenzmoleküle durch die Lichtverteilung der LQ 2. Danach erfolgt die Detektion der Fluoreszenzphotonen durch spontane Emission der verbleibenden angeregten Fluoreszenzmoleküle. Im Anschluss kann in einem neuen Zyklus wiederum mit einem Puls der LQ1 homogen angeregt werden.

Bei der Entvölkerung des Grundniveaus bzw. beim Schalten der Farbstoffe geschieht die Unterdrückung der Fluoreszenzaktivität der Farbstoffmoleküle durch das gezielte Entvölkern des Grundniveaus bzw. das lokale Ändern der Emissions- und / oder der Absorptionseigenschaften des Farbstoffes im Bereich der schwarzen Streifen. Es entstehen also Bereiche in denen durch den Strahl der LQ 1 keine Fluoreszenz angeregt werden kann. Durch Detektion der Fluoreszenz, die im verbleibenden durch LQ 1 anregbaren Bereich generiert wird, kann die Auflösung einer Bildaufnahme erhöht werden. Die Lichtquellen LQ1 und LQ2 müssen hierzu nicht gepulst werden. Mit der Beleuchtungsstruktur der LQ 2 wird der Farbstoff bei der Entvölkerung des Grundniveaus so lange beleuchtet, bis keine Farbstoffmoleküle durch Triplettbevölkerung (Inter System Crossing) im Grundzustand mehr verfügbar sind. Im Zeitraum der Lebensdauer des Triplettniveaus (Millisekundenbereich) erfolgt die Anregung der Fluoreszenzmoleküle in dem nicht vorher bestrahlten Bereichen durch die Lichtverteilung der LQ 1. Es werden die Fluoreszenzphotonen durch spontane Emission in dem nicht vorher bestrahlten Bereichen detektiert.

Beim Schalten der Farbstoffeigenschaften mit der Beleuchtungsstruktur der LQ 2 wird der Farbstoff so lange beleuchtet, bis alle Farbstoffmoleküle im Bereich der Beleuchtungsstruktur der LQ 2 "dunkel" geschaltet sind. Anschließend im Zeitraum, in dem der Farbstoff mit diesen geänderte Eigenschaften vorliegt, werden die Fluoreszenzmoleküle in dem nicht vorher bestrahlten Bereichen durch die Lichtverteilung der LQ 1 angeregt und die durch spontane Emission generierten Fluoreszenzphotonen detektiert.

Durch die Wirkung der Schlitzblende als konfokale Blende kann zusätzlich die Tiefenauflösung des Objektivs auf einen Bereich kleiner d (Abstand der Talbotebenen) reduziert werden. Weiterhin kann das SPEM-Verfahren nach dem Stand der Technik zum Einsatz kommen (Lit: Saturated patterned excitation microscopy, J. Opt. Soc. Am. A, Vol 19, No. 8, 2002).

Vorteilhaft wurde in der hier vorgeschlagenen Anordnung erkannt, dass durch die kohärente Beleuchtung durch ein Gitter eine gleichzeitige Strukturierung in axialer und lateraler Richtung erfolgt. Somit können Verfahren zur Auflösungssteigerung besonders einfach, robust und effizient implementiert werden. Die gleichzeitige Strukturierung in lateraler und axialer Richtung erfolgt durch die interferometrische Überlagerung von 3 in mindestens einer Achse ebene Wellen (-1., 0. und +1. Ordnung). Die Generierung der 3 Ordnungen kann auf verschiedene Arten geschehen, beispielsweise durch die Bestrahlung eines Amplitudengitters mit einer ebene Welle. Weiterhin können spezielle Strahlteileranordnungen zum Einsatz kommen (Lit.: High efficiency beam splitter for multifocal multiphoton mircosopy, J. of. Microscopy, Vol 201, Pt3, 2001, page 1), wobei dann nur 3 Ordnungen erzeugt bzw. verwendet werden.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen[1] und den eingesetzten Untersuchungsmethoden mit einer Vielzahl von Farbstoffen[2] ablesen. Siehe z.B.:

[1]B. Alberts et al. (2002): Molecular Biology of the Cell; Garland Science.

[1,2]G. Karp (2002): Cell and Molecular Biology: Concepts and Experiments; Wiley Text Books.

[1,2]R. Yuste et al. (2000): Imaging neurons - a laboratory Manual; Cold Spring Harbor Laboratory Press, New York.

[2]R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

*Entwicklung von Organismen*

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:

■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.

■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.

■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:

• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.

• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

*Transportvorgänge in Zellen*

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:

■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.

■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.

■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

*Wechselwirkungen von Molekülen*

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:

■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.

■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.

■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

*Signalübertragung zwischen Zellen*

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:

■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.

■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

**Patentansprüche**

1. Mikroskop mit erhöhter Auflösung, aufweisend

- eine erste Lichtquelle (LQ1) für erstes Beleuchtungslicht zur Fluoreszenzanregung,
- eine zweite Lichtquelle (LQ2) für zweites Beleuchtungslicht zur Unterdrückung von Fluoreszenzvorgängen oder Rückführung des angeregten Zustandes oder zur Änderung einer Emissions- und/oder Absorptionseigenschaft eines Farbstoffs,
- ein Mikroskopobjektiv (O) und
- einen Detektionsstrahlengang mit einer konfokalen Blende und einem Detektor (DE),
wobei erstes und zweites Beleuchtungslicht räumlich in der Probe überlagert werden, **gekennzeichnet durch**
- eine der zweiten Lichtquelle (LQ2) nachgeordnete Strahlteileranordnung zur Erzeugung und interferometrischen Überlagerung von drei mindestens in einer Achse ebenen Wellen zur Bildung eines Interferenzfeldes aus drei Ordnungen, wobei **durch** Abbildung des Interferenzfeldes in die Probe (PR) eine Talbot-Struktur mit lateraler und axialer Strukturierung zur Auflösungserhöhung entsteht.

2. Mikroskop nach Anspruch 1, wobei das erste und zweite Beleuchtungslicht ein Laserstrahl sind.

3. Mikroskop nach einem der vorangehenden Ansprüche, wobei erstes und zweites Beleuchtungslicht werden gemeinsam über die Probe bewegt werden.

4. Mikroskop nach einem der vorangehenden Ansprüche, wobei eine linienförmige Beleuchtung der Probe erfolgt.

5. Mikroskop nach einem der vorangehenden Ansprüche, wobei die Strahlteileranordnung als Gitter (G) ausgebildet ist.

6. Mikroskop nach einem der vorangehenden Ansprüche, wobei die zweite Lichtquelle zur Unterdrückung von Fluoreszenzvorgängen oder zur Rückführung des angeregten Zustandes oder zur Änderung einer Emissions- und/oder Absorptionseigenschaft eines Farbstoffs ausgebildet ist.

7. Mikroskop nach einem der vorangehenden Ansprüche, wobei die Tiefenauflösung des Mikroskopobjektives im Bereich des Abstandes der Talbotebenen liegt.

**8.** Mikroskop nach einem der vorangehenden Ansprüche, wobei mindestens eine der Lichtquellen ein gepulster Laser ist.

**9.** Verfahren zum Betrieb eines Mikroskops, aufweisend eine erste Lichtquelle (LQ1) für erstes Beleuchtungslicht zur Fluoreszenzanregung, eine zweite Lichtquelle (LQ2) für zweites Beleuchtungslicht, ein Mikroskopobjektiv (O) und einen Detektionsstrahlengang mit einem Detektor (DE), wobei die Probe mit dem ersten und dem zweiten Beleuchtungslicht beleuchtet wird, wobei erstes und zweites Beleuchtungslicht räumlich in der Probe überlagert werden, wobei das erste Beleuchtungslicht eine Anregung der Probe bewirkt und in der Probe in den Bereichen des zweiten Beleuchtungslichtmusters eine Unterdrückung von Fluoreszenzvorgängen oder eine Rückführung des angeregten Zustandes oder eine Änderung einer Emissions- und/oder Absorptionseigenschaft eines Farbstoffs erfolgt, wobei in dem zweiten Beleuchtungslicht mittels einer Strahlteileranordnung drei mindestens in einer Achse ebene Wellen zur Bildung eines Interferenzfeldes aus drei Ordnungen erzeugt und interferometrisch überlagert werden, so dass das zweite Beleuchtungslicht durch Abbildung des Interferenzfeldes in die Probe (PR) eine Talbot-Struktur mit in einer lateralen Strahlrichtung und in axialer Strahlrichtung periodischer Strukturierung zur Auflösungserhöhung aufweist" wobei abwechselnd eine Entvölkerung und Anregung in der Probe erzeugt wird.

**10.** Verfahren nach Anspruch 9, wobei nach einer Entvölkerung eine Anregung erfolgt.

**11.** Verfahren nach Anspruch 9, wobei nach einer Anregung eine Entvölkerung erfolgt.

**12.** Verfahren nach einem der vorangehenden Verfahrens-Ansprüche 9-11, wobei zur Erzeugung des ersten und zweiten Beleuchtungslichtes zwei gepulste Laser synchronisiert sind, so dass abwechselnd eine Anregung und Entvölkerung in der Probe stattfindet.

**13.** Verfahren nach einem der vorangehenden Verfahrens-Ansprüche 9-12, wobei die optische Auflösung einstellbar ist.

**14.** Verfahren nach einem der vorangehenden Verfahrens-Ansprüche 9-13, wobei die optische Auflösung durch Variieren der Frequenz der periodischen Struktur einstellbar ist.

**15.** Verfahren nach einem der vorangehenden Verfahrens-Ansprüche 9-14, wobei bei Auswechslung des Mikroskopobjektives eine Auswechslung der Mittel zur Erzeugung der Struktur des zweiten Beleuchtungslichtes erfolgt

**16.** Verfahren nach einem der vorangehenden Verfahrens-Ansprüche 9-15, wobei ein Gitter im zweiten Beleuchtungslicht ausgewechselt wird.

**17.** Verfahren nach einem der vorangehenden Verfahrens-Ansprüche 9-16, zur Untersuchung von Entwicklungsprozessen, insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:

• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

18. Verfahren nach einem der vorangehenden Verfahrens-Ansprüche 9-17, für die Untersuchung von innerzellulären Transportvorgängen, insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

19. Verfahren nach einem der vorangehenden Verfahrens-Ansprüche 9-18, zur Darstellung molekularer und anderer subzellulärer Wechselwirkungen, insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

20. Verfahren nach einem der vorangehenden Verfahrens-Ansprüche 9-19, zur Darstellung von schnellen Signalübertragungsvorgängen, insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem.

21. Verfahren nach einem der vorangehenden Verfahrens-Ansprüche 9-20, wobei die Strahlteileranordnung ein Gitter (G) ist.

**Claims**

1. Microscope with an increased resolution, comprising:

    - a first light source (LQ1) for first illumination light for exciting fluorescence,
    - a second light source (LQ2) for second illumination light for suppressing fluorescence processes or for restoring the excited state or for changing an emission property and/or absorption property of a dye,
    - a microscope objective (O) and
    - a detection beam path with a confocal stop and a detector (DE),
    with first and second illumination light being spatially superposed in the sample,
    **characterized by**
    - a beam splitter arrangement arranged downstream of the second light source (LQ2), for generating and interferometrically superposing three waves, plane along at least one axis, for forming an interference field of three orders of magnitude, with a Talbot structure with lateral and axial structuring being created by imaging the interference field in the sample (PR), for increasing the resolution.

2. Microscope according to Claim 1, wherein the first and second illumination light are a laser beam.

3. Microscope according to one of the preceding claims, wherein first and second illumination light are moved over the sample together.

4. Microscope according to one of the preceding claims, wherein there is linear illumination of the sample.

5. Microscope according to one of the preceding claims, wherein the beam splitter arrangement is embodied as a grating (G).

6. Microscope according to one of the preceding claims, wherein the second light source is embodied for suppressing fluorescence processes or for restoring the excited state or for changing an emission property and/or absorption property of a dye.

7. Microscope according to one of the preceding claims, wherein the depth resolution of the microscope objective lies in the region of the spacing of the Talbot planes.

8. Microscope according to one of the preceding claims, wherein at least one of the light sources is a pulsed laser.

9. Method for operating a microscope comprising a first light source (LQ1) for first illumination light for exciting fluorescence, a second light source (LQ2) for second illumination light, a microscope objective (O) and a detection beam path with a detector (DE), the sample being illuminated by the first and the second illumination light, first and second illumination light being spatially superposed in the sample, the first illumination light bringing about an excitation of the sample and there being a suppression of fluorescence processes or a restoration of the excited state or a change in an emission property and/or absorption property of a dye in the sample in the regions of the second illumination light pattern, three waves, plane along at least one axis, being generated and interferometrically superposed in the second illumination light by means of a beam splitter arrangement, for forming an interference field of three orders of magnitude such that the second illumination light has a Talbot structure with periodic structuring in a lateral beam direction and in an axial beam direction by imaging the interference field in the sample (PR), for increasing the resolution, with depopulation and excitation being generated alternately in the sample.

**10.** Method according to Claim 9, wherein an excitation occurs after a depopulation.

**11.** Method according to Claim 9, wherein a depopulation occurs after an excitation.

**12.** Method according to one of the preceding Method Claims 9-11, wherein two pulsed lasers are synchronized for generating the first and second illumination light such that there is, alternately, an excitation and depopulation in the sample.

**13.** Method according to one of the preceding Method Claims 9-12, wherein the optical resolution can be set.

**14.** Method according to one of the preceding Method Claims 9-13, wherein the optical resolution can be set by varying the frequency of the periodic structure.

**15.** Method according to one of the preceding Method Claims 9-14, wherein the means for generating the structure of the second illumination light is interchanged when the microscope objective is interchanged.

**16.** Method according to one of the preceding Method Claims 9-15, wherein a grating in the second illumination light is interchanged.

**17.** Method according to one of the preceding Method Claims 9-16, for examining development processes, in particular dynamic processes in the range from tenths of a second to hours, in particular on the level of groups of cells and whole organisms, in particular according to at least one of the following items:

• analysis of living cells in a 3D environment, the neighbouring cells of which react sensitively to laser illumination and have to be protected from the illumination of the 3D-ROI;
• analysis of living cells in a 3D environment with markings, which are intended to be bleached in 3D in a targeted manner by laser illumination, e.g. FRET experiments;
• analysis of living cells in a 3D environment with markings, which are intended to be bleached in a targeted manner by laser illumination and simultaneously also to be observed outside of the ROI, e.g. FRAP and FLIP experiments in 3D;
• targeted analysis of living cells in a 3D environment with markings and pharmaceuticals, which have manipulation-caused changes as a result of laser illumination, e.g. activation of transmitters in 3D;
• targeted analysis of living cells in a 3D environment with markings, which have manipulation-caused colour changes as a result of laser illumination, e.g. paGFP, Kaede;
• targeted analysis of living cells in a 3D environment with very weak markings, which e.g. require an optimum balance between confocality and detection sensitivity;
• living cells in a 3D tissue structure with varying multiple markings, e.g. CFP, GFP, YFP, DsRed, HcRed and the like;
• living cells in a 3D tissue structure with markings having function-dependent colour changes, e.g. Ca+ markers;
• living cells in a 3D tissue structure with markings having development-caused colour changes, e.g. genetically modified animals with GFP;
• living cells in a 3D tissue structure with markings having manipulation-caused colour changes as a result of laser illumination, e.g. paGFP, Kaede;
• living cells in a 3D tissue structure with very weak markings, which require a restriction of confocality in favour of detection sensitivity;
• the item mentioned last in combination with the preceding.

**18.** Method according to one of the preceding Method Claims 9-17, for examining intracellular transport processes, in particular for displaying small motile structures, e.g. proteins, with high speed (usually in the region of hundredths of a second), in particular for applications such as FRAP with ROI bleaching.

**19.** Method according to one of the preceding Method Claims 9-18, for displaying molecular and other subcellular interactions, in particular for displaying very small structures with high speed, preferably using indirect techniques such as e.g. FRET with ROI bleaching for resolving submolecular structures.

**20.** Method according to one of the preceding Method Claims 9-19, for displaying fast signal transmission processes, in particular neurophysiological processes with a high time resolution, since the activities imparted by ions occur in the region of hundredths to less than one thousandth of a second, in particular in the case of examinations in the muscular or nervous system.

**21.** Method according to one of the preceding Method Claims 9-20, wherein the beam splitter arrangement is a grating (G).

**Revendications**

**1.** Microscope ayant une résolution accrue, présentant

- une première source de lumière (LQ1) pour une première lumière d'éclairage pour l'excitation en fluorescence,

- une deuxième source de lumière (LQ2) pour une deuxième lumière d'éclairage pour inhiber les phénomènes de fluorescence ou annuler l'état excité ou pour modifier une propriété d'émission et/ou d'absorption d'un colorant,
- un objectif de microscope (O) et
- un trajet de rayon de détection comprenant un diaphragme à foyer commun et un détecteur (DE),

la première et la deuxième lumière d'éclairage étant superposées tridimensionnellement dans l'échantillon, **caractérisé par** un arrangement diviseur de rayon disposé à la suite de la deuxième source de lumière (LQ2) pour générer et superposer de manière interférométrique trois ondes planes au moins dans un axe en vue de former un champ d'interférence de trois ordres, la formation du champ d'interférence produisant dans l'échantillon (PR) une structure Talbot avec structuration latérale et axiale en vue d'augmenter la résolution.

2. Microscope selon la revendication 1, avec lequel la première et la deuxième lumière d'éclairage sont un rayon laser.

3. Microscope selon l'une des revendications précédentes, avec lequel la première et la deuxième lumière d'éclairage sont déplacées ensemble au-dessus de l'échantillon.

4. Microscope selon l'une des revendications précédentes, avec lequel est effectué un éclairage de forme linéaire de l'échantillon.

5. Microscope selon l'une des revendications précédentes, avec lequel l'arrangement diviseur de rayon est réalisé sous la forme d'une grille (G).

6. Microscope selon l'une des revendications précédentes, avec lequel la deuxième source de lumière est configurée pour inhiber les phénomènes de fluorescence ou pour annuler l'état excité ou pour modifier une propriété d'émission et/ou d'absorption d'un colorant.

7. Microscope selon l'une des revendications précédentes, avec lequel la résolution en profondeur de l'objectif de microscope se trouve dans la plage de l'écart des plans Talbot.

8. Microscope selon l'une des revendications précédentes, avec lequel au moins l'une des sources de lumière est un laser pulsé.

9. Procédé pour faire fonctionner un microscope présentant une première source de lumière (LQ1) pour une première lumière d'éclairage pour l'excitation en fluorescence, une deuxième source de lumière (LQ2) pour une deuxième lumière d'éclairage, un objectif de microscope (O) et un trajet de rayon de détection comprenant un détecteur (DE), l'échantillon étant éclairé par la première et la deuxième lumière d'éclairage, la première et la deuxième lumière d'éclairage étant superposées tridimensionnellement dans l'échantillon, la première lumière d'éclairage provoquant une excitation de l'échantillon et une inhibition des phénomènes de fluorescence ou une annulation de l'état excité ou une modification d'une propriété d'émission et/ou d'absorption d'un colorant ayant lieu dans l'échantillon dans les zones du deuxième modèle de lumière d'éclairage, trois ondes planes au moins dans un axe étant générées et superposées de manière interférométrique dans la deuxième lumière d'éclairage au moyen d'un arrangement diviseur de rayon en vue de former un champ d'interférence de trois ordres, de sorte que la deuxième lumière d'éclairage, par formation du champ d'interférence dans l'échantillon (PR), présente une structure Talbot avec structuration périodique dans une direction latérale du rayon et dans la direction axiale du rayon en vue d'augmenter la résolution, un dépeuplement et une excitation étant produits en alternance dans l'échantillon.

10. Procédé selon la revendication 9, selon lequel une excitation a lieu après un dépeuplement.

11. Procédé selon la revendication 9, selon lequel un dépeuplement a lieu après une excitation.

12. Procédé selon l'une des revendications précédentes 9 à 11, selon lequel, pour générer la première et la deuxième lumière d'éclairage, deux lasers pulsés sont synchronisés, de sorte qu'une excitation et un dépeuplement ont lieu en alternance dans l'échantillon.

13. Procédé selon l'une des revendications précédentes 9 à 12, selon lequel la résolution optique est réglable.

14. Procédé selon l'une des revendications précédentes 9 à 13, selon lequel la résolution optique est réglable en faisant varier la fréquence de la structure périodique.

15. Procédé selon l'une des revendications précédentes 9 à 14, selon lequel un remplacement des moyens de génération de la structure de la deuxième lumière d'éclairage a lieu lors du remplacement de l'objectif de microscope.

16. Procédé selon l'une des revendications précédentes 9 à 15, selon lequel une grille est changée dans la deuxième lumière d'éclairage.

**17.** Procédé selon l'une des revendications précédentes 9 à 16, pour l'examen de processus de développement, notamment des processus dynamiques dans la plage de quelques dixièmes de secondes à plusieurs heures, notamment sur le plan de bandes de cellules et d'organismes entiers, notamment d'après au moins l'un des points suivants :

   * analyse de cellules vivantes dans un environnement 3D, dont les cellules voisines réagissent avec sensibilité à l'éclairage laser et qui doivent être protégées de l'éclairage de la région intéressante 3D ;
   * analyse de cellules vivantes dans un environnement 3D avec des marquages qui doivent être décolorés de manière ciblée par éclairage laser en 3D, par exemple des expériences de FRET ;
   * analyse de cellules vivantes dans un environnement 3D avec des marquages qui doivent être décolorés de manière ciblée par éclairage laser et en même temps aussi être observés à l'extérieur de la région intéressante, par exemple des expériences de FRAP et de FLIP en 3D ;
   * analyse ciblée de cellules vivantes dans un environnement 3D avec des marquages et des médicaments qui présentent des modifications liées aux manipulations par éclairage laser, par exemple activation de transmetteurs en 3D ;
   * analyse ciblée de cellules vivantes dans un environnement 3D avec des marquages qui présentent des changements de couleur liés aux manipulations par éclairage laser, par exemple paGFP, Kaede ;
   * analyse ciblée de cellules vivantes dans un environnement 3D avec des marquages très faibles, qui exigent par exemple un équilibre optimal de la caractéristique de foyer commun par rapport à la sensibilité de détection ;
   * cellules vivantes dans un système de tissu 3D avec des marquages multiples variables, par exemple CFP, GFP, YFP, DsRed, HcRed, et similaire ;
   * cellules vivantes dans un système de tissu 3D avec des marquages qui présentent des changements de couleur dépendants de la fonction, par exemple marqueur Ca+ ;
   * cellules vivantes dans un système de tissu 3D avec des marquages qui présentent des changements de couleur liés au développement, par exemple animaux transgéniques avec GFP ;
   * cellules vivantes dans un système de tissu 3D avec des marquages qui présentent des changements de couleur liés aux manipulations par éclairage laser, par exemple paGFP, Kaede ;
   * cellules vivantes dans un système de tissu 3D avec des marquages très faibles, qui exigent une limitation de la caractéristique de foyer commun en faveur de la sensibilité de détection ;

   * le dernier point mentionné en combinaison avec les précédents.

**18.** Procédé selon l'une des revendications précédentes 9 à 17, pour l'examen de phénomènes de transport intracellulaires, notamment pour la représentation de petites structures motiles, par exemple des protéines, avec une vitesse élevée (généralement de l'ordre de centièmes de seconde), notamment pour des applications comme le FRAP avec décoloration de la région intéressante.

**19.** Procédé selon l'une des revendications précédentes 9 à 18, pour la représentation d'interactions moléculaires et d'autres interactions subcellulaires, notamment pour la représentation de très petites structures avec une grande vitesse, de préférence en utilisant des techniques indirectes comme, par exemple, le FRET avec décoloration de la région intéressante pour la résolution de structures submoléculaires.

**20.** Procédé selon l'une des revendications précédentes 9 à 19, pour la représentation de phénomènes de transmission de signaux rapides, notamment de phénomènes neurophysiologiques avec une haute résolution dans le temps, car les activités communiquées par les ions se déroulent dans la plage des centièmes à moins du millième de seconde, notamment lors des examens dans le système musculaire ou nerveux.

**21.** Procédé selon l'une des revendications précédentes 9 à 20, selon lequel l'arrangement diviseur de rayon est une grille (G).

Fig. 1

Fig. 2

Fig. 4

Fig. 3

Fig.5

Strahl 2 zur Entvölkerung

+1te Ordnung

Fig.6

0te Ordnung

X

Z

-1te Ordnung

Talbot-Effekt

Fig.6a)

$a_t$

Bei der Überlagerung der +/-1sten und der 0ten Beugungsodnung ergibt sich Versatz der Struktur genau um pi/2 im Abstand der Talbotlänge $a_t$

Strahl 1 zur Anregung der Probensignale

Tiefenauflösung des Objektivs Δz

d

x

z

Talbot-Gitter durch Strahl 2

Fig.7

EP 1 617 259 B1

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- DE 10257237 A1
- US 6028306 A
- WO 8807695 A
- DE 2360197 A1
- DE 10257237

**In der Beschreibung aufgeführte Nicht-Patentliteratur**

- **GUSTAFSSON, M.** Doubling the lateral resolution of wide-field fluorescence microscopy using structured illumination. *Three-dimensional and multidimensional microscopy: Image acquisition processing VII'', Proceedings of SPIE,* 2000, vol. 3919, 141-150
- **LIT. S. W. HELL ; J. WICHMANN.** *Opt. Lett.,* 1994, vol. 19, 780
- **T. A. KLAR ; M. DYBA ; S. W. HELL.** *Appl. Phys. Let,* 2001, vol. 78 (4), 393
- *J. Opt. Soc. Am. A,* 2002, vol. 19 (8
- High efficiency beam splitter for multifocal multiphoton mircosopy. *J. of. Microscopy,* vol. 201, 1
- **B. ALBERTS et al.** *Molecular Biology of the Cell; Garland Science,* 2002
- **G. KARP.** Cell and Molecular Biology: Concepts and Experiments. Wiley Text Books, 2002
- **R. YUSTE et al.** Imaging neurons - a laboratory Manual. Cold Spring Harbor Laboratory Press, 2000
- **R.P. HAUGLAND.** Handbook of fluorescent Probes and research Products. Molecular Probes Inc, 2003
- **ABDUL-KARIM, M.A. et al.** Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen. *Microvasc. Res.,* 2003, vol. 66, 113-125
- **SOLL, D.R. et al.** softwarebasierte Bewegungsanalyse von mikroskopischen Daten von Kernen und Pseudopodien lebender Zellen in allen 3 Raumdimensionen. *Scientific World Journ.,* 2003, vol. 3, 827-841
- **GROSSMANN, R. et al.** 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht. *Glia,* 2002, vol. 37, 229-240
- **UMENISHI, F. et al.** Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert. *Biophys J.,* 2000, vol. 78, 1024-1035
- **GIMPL, G. et al.** Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging. *Prog. Brain Res.,* 2002, vol. 139, 43-55
- **ZHANG et al.** live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging. *Neuron,* 2001, vol. 31, 261-275
- **PETERSEN, M.A. ; DAILEY, M.E.** Zweikanalaufnahme lebender Hippokampuskulturen der Ratte, wobei die zwei Kanäle für die Marker Lectin und Sytox räumlich in 3D und über einen längeren Zeitraum aufgezeichnet werden. *Glia,* 2004, vol. 46, 195-206
- **YAMAMOTO, N. et al.** Zweifarbimaging von humanen fibrosarcoma Zellen, wobei grünes und rotes fluoreszentes Protein (GFP und RFP) simultan in Echtzeit beobachtet wurde. *Clin. Exp. Metastasis,* 2003, vol. 20, 633-638
- **BERTERA, S. et al.** Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier. *Biotechniques,* 2003, vol. 35, 718-722

- **BRUM G et al.** Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes. *J Physiol.,* 2000, vol. 528, 419-433

- **SCHMIDT H et al.** Analyse von Ca+ Ionen in Nervenzellfortsätzen von transgenen Mäusen. *J Physiol.,* 2003, vol. 551, 13-32